# EUROPÄISCHE PATENTSCHRIFT

(11) **EP 1 458 996 B1**
(45) Veröffentlichungstag und Bekanntmachung des Hinweises auf die Patenterteilung: **08.11.2006**
(21) Anmeldenummer: 02804875.9
(22) Anmeldetag: 05.12.2002
(51) Int. Cl.: F16K 11/056, F16K 31/00

(54) **MEHRWEGEVENTIL UND KÄLTEMASCHINE MIT MEHRWEGEVENTIL**
MULTIWAY VALVE AND REFRIGERATING MACHINE EQUIPPED WITH A MULTIWAY VALVE
DISTRIBUTEUR MULTIPLE ET MACHINE FRIGORIFIQUE MUNIE D'UN DISTRIBUTEUR A VOIES MULTIPLES

(30) Priorität: 19.12.2001 DE 10162502
(43) Veröffentlichungstag der Anmeldung: 22.09.2004
(73) Patentinhaber: BSH Bosch und Siemens Hausgeräte GmbH, 81739 München (DE)
(72) Erfinder: WENNING, Udo, 89537 Giengen/Brenz (DE); KORDON, Rolf, 89537 Giengen (DE); EBERHARDT, Hans-Frieder, 89537 Giengen-Burgberg (DE); NEUMANN, Michael, 89073 Ulm (DE)
(86) Internationale Anmeldenummer: PCT/EP2002/013808
(87) Internationale Veröffentlichungsnummer: WO 2003/052304

(56) Entgegenhaltungen:
- DE-A- 19 822 735
- US-A- 4 736 587
- US-A- 4 973 024
- PATENT ABSTRACTS OF JAPAN vol. 006, no. 080 (M-129), 19. Mai 1982 (1982-05-19) & JP 57 018875 A (MATSUSHITA ELECTRIC IND CO LTD), 30. Januar 1982 (1982-01-30)
- PATENT ABSTRACTS OF JAPAN vol. 014, no. 228 (M-0973), 15. Mai 1990 (1990-05-15) & JP 02 057776 A (RANCO JAPAN LTD), 27. Februar 1990 (1990-02-27)

## Beschreibung

Die vorliegende Erfindung betrifft ein Mehrwegeventil und eine Kältemaschine, in deren Kreislauf ein solches Mehrwegeventil eingesetzt ist.

Derartige Mehrwegeventile bzw. Kältemaschinen kommen z.B. in Kältegeräten zum Einsatz, die mehrere jeweils durch einen eigenen Verdampfer auf unabhängig voneinander einstellbare Temperaturen regelbare Kühlfächer aufweisen; sie dienen dort zum Aufteilen des Kältemittelstroms auf einen oder mehrere Verdampfer. Die gegenwärtig in Kältemaschinen verwendeten Mehrwegeventile sind im allgemeinen Magnetventile. Diese haben ein Gehäuse mit mehreren Ventilsitzen und einem durch Magnetkraft zwischen stabilen Positionen an jeweils einem der Ventilsitze bewegbaren Schließorgan.

Ein gattungsgemäßes Ventil gemäß Oberbegriff von Anspruch 1 ist beispielsweise aus dem Patent Abstract der JP-A-57 018875 oder auch aus der US-A-4 973 024 bekannt.

Ein nicht magnetisch betätigtes Magnetventil ist aus DE 198 22 735 A1 bekannt. Das Gehäuse dieses bekannten Mehrwegeventils umfasst drei Kammern, eine mittlere Kammer, in der ein Schließorgan zwischen zwei Sitzen an gegenüberliegenden Seitenwänden beweglich ist, und zwei seitliche Kammern, in welche die Öffnungen der Ventilsitze münden und in denen jeweils eine Feder aus einer Form-Gedächtnis-Legierung untergebracht ist. Beide Federn drücken jeweils über einen Kolben und eine sich durch die Öffnung des jeweiligen Ventilsitzes erstreckende Stange auf das Schließorgan in der mittleren Kammer. Durch Erwärmen einer ersten der zwei seitlichen Kammern verlängert sich die darin befindliche Feder und drückt das Schließorgan gegen den zur zweiten seitlichen Kammer führenden Ventilsitz, wobei sie die Feder in der zweiten seitlichen Kammer zusammendrückt.

Um den Schließkörper von einem Sitz zum anderen zu verlagern, muss eine Feder nicht nur die zum Verformen der jeweils anderen Feder erforderliche Kraft aufbringen, sondern darüber hinaus eine Kraft, die dem Produkt aus Druckdifferenz zwischen zentraler und seitlicher Kammer und der Querschnittsfläche der Ventilsitzöffnung entspricht. Es besteht daher die Gefahr, dass bei einer zu hohen Druckdifferenz das Mehrwegeventil nicht zuverlässig umschaltet.

Aufgabe der vorliegenden Erfindung ist, ein mit Hilfe eines Elements aus einer Form-Gedächtnis-Legierung umschaltbares Mehrwegeventil anzugeben, dessen Funktionsfähigkeit auch durch eine hohe Druckdifferenz an einem verschlossenen Ventilsitz nicht beeinträchtigt wird, und bei dem für die Verdrängung des Schließorganes von seinem Sitz auch kein wesentlicher Reibungswiderstand überwunden werden muss.

Die Aufgabe wird gelöst durch ein Mehrwegeventil mit den Merkmalen des Anspruches 1.

Indem die Richtung, in der das Schließorgan vom Sitz verdrängt wird, im wesentlichen quer zur Normalenrichtung des Sitzes gelegt wird, braucht zum Verdrängen des Schließorgans von seinem Sitz die in der Normalenrichtung wirkende, aus der Druckdifferenz resultierende Kraft nicht oder allenfalls in geringem Umfange überwunden zu werden.

Dadurch daß das Schließorgan kugelförmig ist, kann es in einer Rollbewegung von seinem Sitz verdrängt werden. Die Kugelgestalt erleichtert darüber hinaus einen dichten Abschluss an einem kreisrunden Ventilsitz.

Um sicher zu stellen, dass das Schließorgan aus der Umgebung der Ventilsitze nicht entweichen kann und in einem Ruhezustand stets einen von diesen verschließt, ist das Schließorgan vorzugsweise in einem Schlitten gehalten, der durch das Stellglied zum Verdrängen des Schließverbands verschiebbar ist.

Vorzugsweise ist ferner das Schließorgan in dem Schlitten selbst in Verdrängungsrichtung beweglich, wobei die Bewegungsfreiheit des Schließorgans in dem Schlitten kleiner als der Abstand zwischen zwei Sitzen ist. So ist zum einen gewährleistet, dass in jeder Ruheposition des Schlittens das Schließorgan nur jeweils einen dieser Position entsprechenden Ventilsitz verschließen kann, andererseits genügt eine Bewegung des Schlittens zwischen benachbarten Ruhepositionen, die kleiner als der Abstand zwischen zwei benachbarten Sitzen ist, um das Schließorgan so weit von einem der zwei Sitze zu verdrängen, dass es diesen nicht mehr verschließt und von dem Schlitten unbehindert eine Schließposition an einen zweiten Ventilsitze einnehmen kann.

Vorzugsweise umfasst das Mehrwegeventil ein federelastisches Ventil zum Ausüben einer Gegenkraft auf das Schließorgan, die der Verdrängung des Schließorgans von jedem Sitz entgegen wirkt. Ein solches Federelement hält das Verschlussorgan fest am Sitz, auch wenn kein Fluid durch das Ventil strömt und infolgedessen die Druckdifferenz zwischen der mittleren Kammer und der vom Schließorgan abgesperrten Nebenkammer verschwindet, und sogar dann, wenn der Druck in der Nebenkammer geringfügig höher als in der zentralen Kammer wird.

Vorzugsweise befinden sich die Sitze an einer gleichen Seitenwand der Kammer, so dass ein einzelnes, vorzugsweise an einer gegenüberliegenden Seitenwand des Gehäuses angeordnetes federelastisches Element genügt, um das Schließorgan jeweils in Richtung dieser Sitze zu beaufschlagen.

Dieses federelastische Element kann zweckmäßigerweise eine Blattfeder sein.

Zum Umschalten des Mehrwegeventils zwischen seinen unterschiedlichen Schaltstellungen ist vorzugsweise jedem als Stellglied dienenden federelastischen Element aus Form-Gedächtnis-Legierung eine elektrische Heizeinrichtung zum selektiven Erhitzen des Elements zugeordnet.

Bei der Heizeinrichtung kann es sich um einen in der Umgebung des zugeordneten Stellgliedes um das Gehäuse des Mehrwegeventils gewickelten Heizwiderstand oder einen um das Element selbst gewickelten Heizwiderstand handeln. Die erste Alternative ist besonders einfach und preiswert, da für die elektrische Versorgung der Heizeinrichtung keine Durchführung von Drähten durch das Gehäuse erforderlich ist; die zweite Alternative hat den Vorteil, dass sie, insbesondere wenn die Heizeinrichtung durch direkten Kontakt mit das Ventil durchströmendem Fluid kühlbar ist, schnellere Reaktionszeiten des Mehrwegeventils ermöglicht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines Mehrwegeventils gemäß einer ersten Ausgestaltung der Erfindung;
- Fig. 2: einen Schnitt durch das Mehrwegeventil aus Fig. 1 entlang der durch Linien A, B in Fig. 1 definierten Ebene;
- Fig. 3: einen Schnitt entlang der durch Linien A, C in Fig. 1 definierten Ebene;
- Fig. 4: eine perspektivische Ansicht eines Mehrwegeventils gemäß einer zweiten Ausgestaltung; und
- Fig. 5: einen Schnitt analog dem der Fig. 2 durch ein Mehrwegeventil gemäß einer dritten Ausgestaltung.

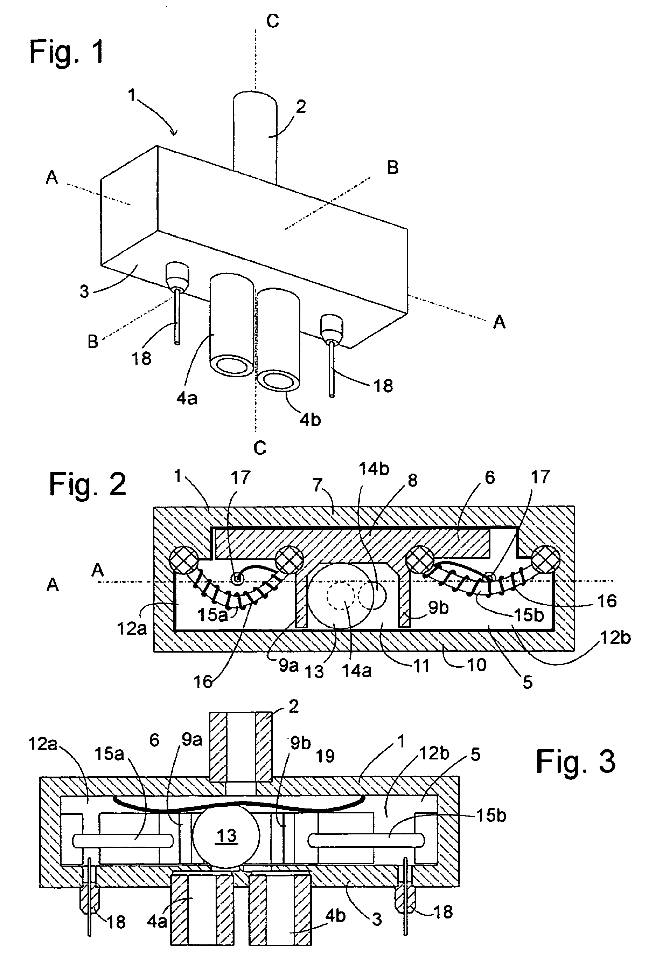

Fig. 1 zeigt ein erfindungsgemäßes Mehrwegeventil mit einem Gehäuse 1 aus Metall, das an einer Gehäuseseite, hier der vom Betrachter abgewandten Oberseite, einen Eingangsanschluss 2 und an der gegenüberliegenden Gehäuseunterseite 3 zwei Ausgangsanschlüsse 4a, 4b für ein Fluid aufweist. Ebenfalls an der Unterseite 3 sind zwei Stromdurchführungen 18 gegen das Gehäuse 1 isoliert in dessen Inneres geführt. Ein Masseanschluss ist direkt mit dem Gehäuse an einer beliebigen Stelle verbunden, er ist in der Fig. nicht dargestellt.

Fig. 2 zeigt einen "horizontalen" Schnitt durch das Mehrwegeventil der Fig. 1 in der durch die Linien A, B der Fig. 1 definierten Ebene. In einer Kammer 5 im Innern des Gehäuses 1 ist ein Schlitten 6 aus einem elektrisch nicht leitenden Material, z.B. einem Kunststoff, in Richtung der Linie A verschiebbar gelagert. Der Schlitten 6 umfasst eine an einer Seitenwand 7 des Gehäuses 1 verschiebbar geführte Basisplatte 8 und zwei Schenkel 9a, 9b, die sich ausgehend von der Basisplatte 8 bis in einen geringen Abstand von der gegenüberliegenden Seitenwand 10 des Gehäuses erstrecken. Die Schenkel 9a, 9b unterteilen die Kammer 5 in eine zentrale Kammer 11 zwischen den zwei Schenkeln 9a, 9b und zwei seitliche Kammern 12a, 12b jeweils jenseits von den Schenkeln 9a, 9b**.**

In der zentralen Kammer 11 ist eine als Schließorgan fungierende Kugel 13 untergebracht. In der in der Fig. gezeigten Konfiguration des Mehrwegeventils liegt die Kugel 13 mittig auf einem am Boden der Kammer 5 gebildeten linken Ventilsitz 14a und versperrt so den diesem Ventilsitz 14a zugeordneten Ausgangsanschluss 4a (siehe auch Fig. 3). Ein zweiter, rechter Ventilsitz 14b, der zu dem rechten Ausgangsanschluss 4b gehört, ist offen. Der Abstand der Schenkel 9a, 9b voneinander ist so gewählt, dass in der dargestellten Position des Schlittens 6, in der der Abstand vom Mittelpunkt des Ventilsitzes 14a zum nächstgelegenen Schenkel 9a geringfügig größer als der Radius der Kugel 13 ist, der entsprechende Abstand des rechten Ventilsitzes 14b von dem ihm am nächsten gelegenen Schenkel 9b kleiner als dieser Radius ist. Die Kugel 13 kann daher bei dieser Stellung des Schlittens 6, selbst wenn sie aufgrund einer Erschütterung oder dergleichen ihren Platz am Sitz 14a verließe, den Sitz 14b nicht versperren.

In den zwei seitlichen Kammern 12a, 12b sind Elemente aus einer Form-Gedächtnis-Legierung, hier in Form gekrümmter Stäbe 15a, 15b untergebracht, die jeweils an einem Ende mit dem Gehäuse 1 und an einem anderen Ende mit dem Schlitten 6 verbunden sind. In der dargestellten Konfiguration des Mehrwegeventils befindet sich der Schlitten 6 in der Nähe seines linken Anschlags, und der Stab 15a in der linken seitlichen Kammer 12a ist stärker gekrümmt als der Stab 15b in der rechten seitlichen Kammer 12b. Um jeden Stab 15a, 15b ist ein Draht 16 gewickelt, der einen Heizwiderstand bildet. Ein erstes, dem elektrisch nicht leitenden Schlitten 6 zugewandtes Ende jedes Heizdrahts 16 ist mit dem Leiter 17 der elektrischen Durchführung 18 verbunden; das jeweils andere Ende des Heizdrahts 16 ist über das Gehäuse 1 mit Masse verbunden.

Fig. 3 zeigt einen Schnitt durch das Mehrwegeventil der Fig. 1 in der durch die Linien A, C von Fig. 1 definierten Ebene. Die Höhe des Schlittens 6 ist geringer als der Durchmesser der Kugel 13, und eine oberhalb des Schlittens 6 zwischen der Kugel 13 und der Oberseite des Gehäuses 1 eingespannte Blattfeder übt auf die Kugel eine abwärts gerichtete Kraft aus, die die Kugel 13 fest gegen den jeweils von ihr belegten Sitz, hier den Sitz 14a, gedrückt hält.

Durch selektives Beaufschlagen eines der zwei Heizdrähte 16 mit Strom wird der damit umwickelte Stab 15a oder 15b erhitzt und geht in seine jeweilige dem erhitzten Zustand entsprechende Gedächtnisform über. Dadurch wird der Schlitten 6 verschoben und gleichzeitig der jeweils andere, nicht erhitzte Stab 15b oder 15a verformt. Dabei kann die durch Erhitzen hervorgerufene Verformung sowohl eine Streckung als auch eine Krümmung des erhitzten Stabes sein. Bei der folgenden Beschreibung der Arbeitsweise des Ventils wird angenommen, dass die Verformung eine Streckung ist; die Arbeitsweise des Ventils im Falle einer Krümmung ist jedoch genau analog und braucht nicht eigens erläutert zu werden.

Wenn der Stab 15a mit Hilfe seines Heizdrahts 16 erhitzt wird und sich dabei streckt, wird der Schlitten 6 in Richtung seines rechten Anschlages verschoben. Dabei verdrängt der linke Schenkel 9a die Kugel 13 von ihrem Platz auf dem linken Ventilsitz 14a. Die Kraft, die hierfür auf die Kugel 13 ausgeübt werden muss, ist gering, denn die Richtung der Verdrängung der Kugel ist nahezu senkrecht zur Normalenrichtung der Öffnung des Ventilsitzes 14a, die parallel zur Linie C ist. Wie man nachvollziehen kann, ist der Winkel zwischen der Normalenrichtung und der Verdrängungsrichtung der Kugel um so näher an 90°, je kleiner der Durchmesser des Ventilsitzes 14a im Vergleich zum Durchmesser der Kugel 13 ist. Der Durchmesser des Ventilsitzes sollte nach Möglichkeit nicht größer als die Hälfte des Durchmessers der Kugel 13 sein.

Die Verschiebung des Schlittens 6, die zur Verdrängung der Kugel 13 vom Ventilsitz 14a führt, bewirkt gleichzeitig, dass der Schenkel 9b sich vom rechten Ventilsitz 14b entfernt, so dass an diesem Ventilsitz 14b genügend Platz verfügbar wird, so dass die Kugel 13 sich darauf niederlassen und ihn verschließen kann. Sobald der Schenkel 9a die Kugel 13 über etwas mehr als die Hälfte ihres Weges zwischen den zwei Ventilsitzen 14a, 14b geschoben hat, wird die Kugel 13 durch die Kraft der Blattfeder 19 und, falls vorhanden, eine Strömung des Fluids vom Eingangsanschluss zu den Ausgangsanschlüssen in Richtung des rechten Ventilsitzes 14b beaufschlagt und läßt sich auf diesem nieder. Der Weg der Kugel 13 ist dabei fast doppelt so groß wie der Weg, über den der Stab 15a die Kugel antreiben muss.

Da die seitlichen Kammern 12a, 12b über Spalte zwischen der Gehäusewand und den Schenkeln 9a, 9b mit der zentralen Kammer 11 kommunizieren, ist der Fluiddruck in den seitlichen Kammern 12a, 12b stets der gleiche wie in der zentralen Kammer 11. Die Stäbe 15a, 15b müssen daher beim Verdrängen der Kugel 13 nicht gegen eine Druckdifferenz zwischen den Kammern anarbeiten.

Da die seitlichen Kammern 12a, 12b mit der zentralen Kammer 11 kommunizieren, sind die Heizdrähte 16 der Stäbe 15a, 15b normalerweise von dem des Ventil durchströmenden Fluid umgeben und werden durch dieses gekühlt. Wenn das Fluid eine Flüssigkeit ist, so kann es jedoch beim Betrieb der Heizdrähte verdampft werden und so eine thermisch isolierende Blase um den zu erhitzenden Stab 15a oder 15b bilden. Nach Abschalten der Heizdrähte ist der Stab schnell wieder abkühlbar, indem ihm umgebendes verdampftes Fluid von der das Ventil durchlaufenden Strömung fortgespült und durch flüssiges ersetzt wird.

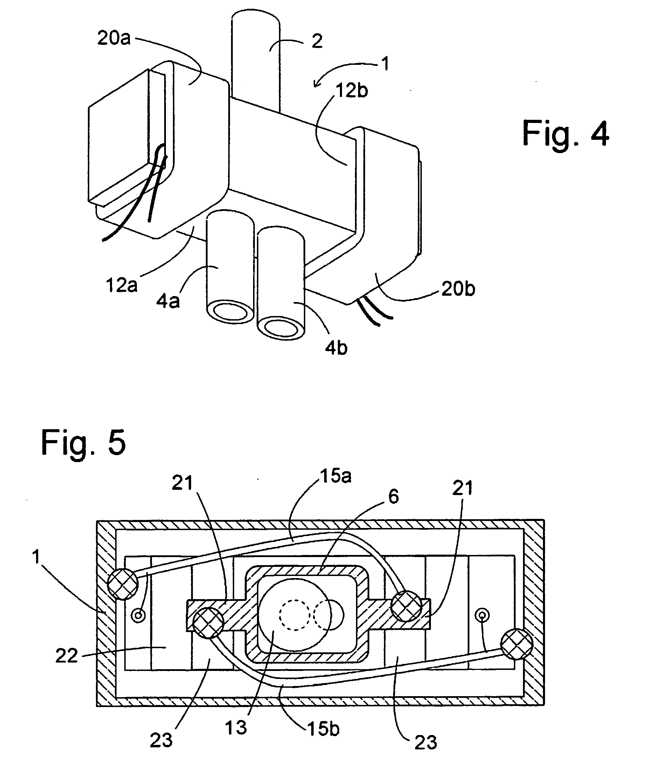

Fig. 4 zeigt eine zweite Ausgestaltung des erfindungsgemäßen Mehrwegeventils in einer perspektivischen Ansicht analog der der Fig. 1. Bei dieser Ausgestaltung fehlen elektrische Durchführungen; statt dessen sind die Wände des Gehäuses 1 bis auf die Eingangs- und Ausgangsanschlüsse 2, 4a, 4b geschlossen. Heizdrahtwicklungen 20a, 20b sind jeweils um die seitlichen Kammern 12a, 12b herum am Gehäuse 1 angeordnet. So wird bei dieser Ausgestaltung ein Stab aus Form-Gedächtnis-Legierung mittelbar, durch Wärmediffusion von einer Heizdrahtwicklung durch das Gehäuse 1 und in der jeweiligen seitlichen Kammer enthaltenes Fluid hindurch, erhitzt. Die Erwärmung eines Form-Gedächtnis-Legierungselements nimmt so selbstverständlich mehr Zeit in Anspruch als bei der Ausgestaltung der Figs. 1 bis 3, dies ist jedoch für eine Anwendung des Magnetventils in einem Kältemittelkreis, z.B. für ein Haushalts-Kältegerät, nicht unbedingt hinderlich, da dort in der Regel deutlich weniger als ein Schaltvorgang des Mehrwegeventils pro Minute erforderlich ist und auch Schaltverzögerungen im Bereich von einigen zehn Sekunden tolerierbar sind. Der Verlängerung der Reaktionszeit steht als Vorteil eine deutlich preiswertere Fertigung und eine längere zu erwartende Lebensdauer des Mehrwegeventils gegenüber, da auf die elektrischen Durchführungen verzichtet werden kann.

Um die Erwärmung der als Stellglieder fungierenden Stäbe zu beschleunigen, ist es denkbar, diese zusammen mit dem gesamten Gehäuse 1 einteilig aus Form-Gedächtnis-Legierung herzustellen.

Fig. 5 zeigt eine dritte Ausgestaltung des erfindungsgemäßen Mehrwegeventils anhand eines Schnitts analog dem der Fig. 2. Der Schlitten 6 hat hier die Form eines Rahmens, der die Kugel 13 auf vier Seiten umgibt. An seitlichen Fortsätzen 21 des Schlittens 6 sind jeweils erste Enden von Stäben 15a, 15b aus Form-Gedächtnis-Legierung befestigt. Zwei um die Stäbe 15a, 15b gewickelte, jeweils über einen durch das Gehäuse geführten Leiter 17 mit Strom versorgte Heizdrähte sind in der Fig. der Einfachheit halber nicht dargestellt. Die Stäbe 15a, 15b erstrecken sich jeweils seitlich am Schlitten 6 vorbei bis zu dem vom ersten Ende des jeweiligen Stabes 15a, 15b abgewandten Ende des Gehäuses 1. Dort sind jeweils die zweiten Enden der Stäbe 15a, 15b befestigt. Die Länge der Stäbe 15a, 15b ist somit im Vergleich zur Länge des Gehäuses 1 wesentlich größer als bei der Ausgestaltung der Figs. 1 bis 3, daher kann auch ein im Verhältnis zur Länge des Gehäuses 1 größerer Hub des Schlittens 6 angetrieben werden. Um die Bewegung des Schlittens linear zu führen, ist in den Boden des Gehäuses 1 ein Kanal 22 eingetieft, und zwei an die Fortsätze 21a, 21b angeformte Platten 23 liegen mit geringem Spiel verschiebbar in diesem Kanal 22.

## Patentansprüche

1. Mehrwegeventil mit einem Gehäuse (1), das mehrere Ein- und Ausgänge (2, 4a, 4b) und eine Kammer (5) mit mehreren jeweils einem Ein- oder Ausgang zugeordneten Ventilsitzen (14a, 14b) aufweist, einem zwischen den Sitzen (14a, 14b) bewegbaren Schließorgan (13) und wenigstens einem Stellglied (15a, 15b) in Form eines Elements aus einer Form-Gedächtnis-Legierung, das in der Lage ist, bei Erhitzung das Schließorgan (13) von einem der Sitze (14a, 14b) zu verdrängen, wobei die Richtung der Verdrängung quer zur normalen Richtung des Sitzes ist, **dadurch gekennzeichnet, dass** das Schließorgan (13) kugelförmig ist.

2. Mehrwegeventil nach Anspruch 1, **dadurch gekennzeichnet, dass** das Schließorgan (13) in einem Schlitten (6) gehalten ist, der durch das Stellglied (15a, 15b) zum Verdrängen des Schließorgans (13) verschiebbar ist.

3. Mehrwegeventil nach Anspruch 2, **dadurch gekennzeichnet, dass** das Schließorgan (13) innerhalb des Schlittens (6) in einer Aufnahme (11) zumindest annähernd geführt gehalten ist.

4. Mehrwegeventil nach Anspruch 2 oder 3, **dadurch gekennzeichnet, dass** das Schließorgan (13) in dem Schlitten (6) in Richtung der Verdrängung beweglich ist, und dass die Bewegungsfreiheit des Schließorgans (13) in dem Schlitten (6) kleiner als der Abstand zwischen zwei Sitzen (14a, 14b) ist.

5. Mehrwegeventil nach einem der vorhergehenden Ansprüche, **gekennzeichnet durch** ein federelastisches Element (19) zum Ausüben einer Gegenkraft auf das Schließorgan, die der Verdrängung des Schließorgans (13) von jedem Sitz (14a, 14b) entgegenwirkt.

6. Mehrwegeventil nach Anspruch 5, **dadurch gekennzeichnet, dass** die Sitze (14a, 14b) an einer ersten Seitenwand (3) der Kammer (5) angeordnet sind und das federelastische Element (19) das Schließorgan (13) in Richtung der ersten Seitenwand (3) beaufschlagt.

7. Mehrwegeventil nach Anspruch 5 oder 6, **dadurch gekennzeichnet, dass** das federelastische Element (19) eine Blattfeder ist.

8. Mehrwegeventil nach einem der vorhergehenden Ansprüche, **dadurch gekennzeichnet, dass** jedem Stellglied (15a, 15b) eine elektrische Heizeinrichtung (16, 20a, 20b) zum selektiven Erhitzen des Stellgliedes zugeordnet ist.

9. Mehrwegeventil nach Anspruch 8, **dadurch gekennzeichnet, dass** die Heizeinrichtung ein um das Stellglied (15a, 15b) gewickelter Heizwiderstand (16) ist.

10. Mehrwegeventil nach Anspruch 9, **dadurch gekennzeichnet, dass** die Heizeinrichtung (16) durch das Ventil durchströmendes Fluid in direktem Kontakt kühlbar ist.

11. Mehrwegeventil nach Anspruch 8 oder 9, **dadurch gekennzeichnet, dass** die Heizeinrichtung (20a, 20b) außerhalb des Gehäuses (1) angeordnet ist.

12. Mehrwegeventil nach Anspruch 1 oder 10, **dadurch gekennzeichnet, dass** das Gehäuse (1) und das Stellglied (15a, 15b) einteilig aus einer Form-Gedächtnis-Legierung aufgebaut sind.

13. Kältemaschine mit einem mehrere Verdampfer aufweisenden Kältemittelkreislauf, **dadurch gekennzeichnet, dass** in dem Kältemittelkreislauf ein Mehrwegeventil nach einem der Ansprüche 1 bis 12 angeordnet ist.

## Claims

1. Multiway valve with a housing (1), which has several input and output means (2, 4a, 4b) and a chamber (5) with several seats (14a, 14b) each associated with a respective input or output, a closure element (13) movable between the seats (14a, 14b) and at least one setting element (15a, 15b) in the form of an element of a shape-memory alloy which is in a position when heated of displacing the closure element (13) from one of the seats (14a, 14b), wherein the direction of the displacement is transverse to the normal direction of the seat, **characterised in that** the closure element (13) is spherical.

2. Multiway valve according to claim 1, **characterised in that** the closure element (13) is held in a slide (6) which is slidable by the setting element (15a, 15b) for displacement of the closure element (13).

3. Multiway valve according to claim 2, **characterised in that** the closure element (13) is held within the slide (6) to be at least approximately guided in a receptacle (11).

4. Multiway valve according to claim 2 or 3, **characterised in that** the closure element (13) is movable in the slide (6) in the direction of the displacement and that the freedom of movement of the closure element (13) in the slide (6) is less than the spacing between two seats (14a, 14b).

5. Multiway valve according to one of the preceding claims, **characterised by** a resilient element (19) for exertion of a counter-force on the closure element which counteracts the displacement of the closure element (13) from each seat (14a, 14b).

6. Multiway valve according to claim 5, **characterised in that** the seats (14a, 14b) are arranged at a first side wall (3) of the chamber (5) and the resilient element (19) loads the closure element (13) in the direction of the first side wall (3).

7. Multiway valve according to claim 5 or 6, **characterised in that** the resilient element (19) is a leaf spring.

8. Multiway valve according to one of the preceding claims, **characterised in that** each setting element (15a, 15b) is associated with an electric heating device (16, 20a, 20b) for selective heating of the setting element.

9. Multiway valve according to claim 8, **characterised in that** the heating device is a heating resistance (16) wound around the setting element (15a, 15b).

10. Multiway valve according to claim 9, **characterised in that** the heating device (16) is coolable by fluid, which flows through the valve, in direct contact.

11. Multiway valve according to claim 8 or 9, **characterised in that** the heating device (20a, 20b) is arranged outside the housing (1).

12. Multiway valve according to claim 1 or 10, **characterised in that** the housing (1) and the setting element (15a, 15b) are of integral construction from a shape-memory alloy.

13. Refrigerating machine with a refrigerant circuit having several evaporators, **characterised in that** a multiway valve according to one of claims 1 to 12 is arranged in the refrigerant circuit.

## Revendications

1. Vanne à plusieurs voies qui présente un boîtier (1) doté de plusieurs entrées et de plusieurs sorties (2, 4a, 4b) et d'une chambre (5) qui présente plusieurs sièges de vanne (14a, 14b) associés à une entrée ou à une sortie respective, d'un organe de fermeture (13) qui peut être déplacé entre les sièges (14a, 14b) et d'au moins un organe de réglage (15a, 15b) qui présente la forme d'un élément en un alliage à mémoire de forme et qui lorsqu'il est chauffé, est en mesure de repousser l'organe de fermeture (13) hors de l'un des sièges (14a, 14b), la direction de la poussée étant transversale par rapport à la direction normale du siège, **caractérisée en ce que** l'organe de fermeture (13) présente une forme sphérique.

2. Vanne à plusieurs voies selon la revendication 1, **caractérisée en ce que** l'organe de fermeture (13) est maintenu dans un chariot (6) qui peut être déplacé par l'organe de réglage (15a, 15b) pour repousser l'organe de fermeture (13).

3. Vanne à plusieurs voies selon la revendication 2, **caractérisée en ce que** l'organe de fermeture (13) est maintenu dans le chariot (6), au moins sensiblement guidé dans un logement (11) .

4. Vanne à plusieurs voies selon la revendication 2 ou 3, **caractérisée en ce que** l'organe de fermeture (13) peut se déplacer dans le chariot (6) dans la direction de la poussée et **en ce que** la liberté de déplacement de l'organe de fermeture (13) dans le chariot (6) est plus petite que la distance entre deux sièges (14a, 14b).

5. Vanne à plusieurs voies selon l'une des revendications précédentes, **caractérisée par** un élément élastique (19) pour exercer sur l'organe de fermeture une contre-force qui s'oppose à la poussée de l'organe de fermeture (13) hors de chaque siège (14a, 14b).

6. Vanne à plusieurs voies selon la revendication 5, **caractérisée en ce que** les sièges (14a, 14b) sont disposés sur une première paroi latérale (3) de la chambre (5) et **en ce que** l'élément élastique (19) sollicite l'organe de fermeture (13) en direction de la première paroi latérale (3).

7. Vanne à plusieurs voies selon la revendication 5 ou 6, **caractérisée en ce que** l'élément élastique (19) est un ressort à lame.

8. Vanne à plusieurs voies selon l'une des revendications précédentes, **caractérisée en ce qu'**à chaque organe de réglage (15a, 15b) est associé un dispositif électrique de chauffage (16, 20a, 20b) qui chauffe sélectivement l'organe de réglage.

9. Vanne à plusieurs voies selon la revendication 8, **caractérisée en ce que** le dispositif de chauffage est une résistance chauffante (16) enroulée autour de l'organe de réglage (15a, 15b).

10. Vanne à plusieurs voies selon la revendication 9, **caractérisée en ce que** le dispositif de chauffage (16) peut être refroidi par contact direct avec le fluide qui traverse la vanne.

11. Vanne à plusieurs voies selon la revendication 8 ou 9, **caractérisée en ce que** le dispositif de chauffage (20a, 20b) est disposé à l'extérieur du boîtier (1).

12. Vanne à plusieurs voies selon la revendication 1 ou 10, **caractérisée en ce que** le boîtier (1) et l'organe de réglage (15a, 15b) sont constitués d'une seule pièce en un alliage à mémoire de forme.

13. Machine frigorifique qui présente un circuit de fluide frigorifique qui présente plusieurs évaporateurs, **caractérisée en ce qu'**une vanne à plusieurs voies selon l'une des revendications 1 à 12 est disposée dans le circuit de fluide frigorifique.
